# EUROPEAN PATENT APPLICATION

(11) **EP 4 585 879 A2**
(43) Date of publication of application: **16.07.2025**
(21) Application number: 25151495.6
(22) Date of filing: 13.01.2025
(51) Int. Cl.: F28F 9/02

(54) **FEATURE FOR SUBFREEZING HEAT EXCHANGER**

(30) Priority: 12.01.2024 US 202418411835
(71) Applicant: Hamilton Sundstrand Corporation, Charlotte, NC 28217-4578 (US)
(72) Inventor: KIRSCH, Kathryn L., East Haddam, CT 06423 (US); BRUNO, Louis J., Ellington, CT 06029 (US); COLSON, Darryl, West Suffield, CT 06093 (US); ARMY, Donald E., Enfield, CT 06082 (US); UCOL, Eugene F., Cromwell, CT 06416 (US); WU, Hailing, Glastonbury CT, 06033 (US)
(74) Representative: Dehns

(57) **Abstract**

An environmental control system includes a component having a component inlet (36) and a component outlet (38) and a flow path fluidly connected to the component inlet and the component outlet. The flow path includes a turn upstream from the component inlet. At least one flow diverter element (100) is arranged within the flow path between the turn and the component outlet. The at least one flow diverter element is positioned to uniformly distribute a flow across the component inlet.

## Description

### BACKGROUND

Embodiments of the present invention relate to environmental control systems for a vehicle, and more particularly, to a heat exchanger within the environmental control system.

Environmental control systems that provide cooling to various heat loads may operate utilizing expanding fluids flowing from an outlet of a turbine. Such airflows generally have high velocities and may be at sub-freezing temperatures. Such airflows may not be evenly distributed upon entering a heat exchanger such as due to the small area of the turbine exhaust compared to the flow area of the heat exchanger inlet face or to a bend or turn in the flow path between the turbine and the heat exchanger. Furthermore, such airflows may contain ice or snow created through the expansion cooling of air through the turbine, which can accumulate on, and may block portions of a heat exchanger inlet face that is immediately downstream. The airflow may also be stratified (e.g., non-uniformly distributed), thus being preferentially directed to only a portion of the inlet face of the heat exchanger. Non-uniform distribution of a high velocity, sub-freezing fluid flow may prevent the heat exchanger from operating in a most efficient manner.

### BRIEF DESCRIPTION

According to one aspect of the invention, an environmental control system includes a component having a component inlet and a component outlet and a flow path fluidly connected to the component inlet and the component outlet. The flow path includes a turn upstream from the component inlet. At least one flow diverter element is arranged within the flow path between the turn and the component outlet. The at least one flow diverter element is positioned to uniformly distribute a flow across the component inlet.
embodiments the turn is a 90-degree turn.

In embodiments the component is a heat exchanger and the at least one flow diverter element is arranged within an inlet manifold of the heat exchanger.

In embodiments the component is a heat exchanger and the at least one flow diverter element is arranged with a core of the heat exchanger.

In embodiments including a duct arranged between the turn and the component inlet along the flow path. The at least one flow diverter element is arranged within the duct.

In embodiments the at least one flow diverter element is heated.

In embodiments the at least one flow diverter element has a hollow interior fluidly coupled to a hot fluid source.

In embodiments the at least one flow diverter element extends over an entire width of the flow path.

In embodiments the at least one flow diverter element extends over only a portion of a width of the flow path.

In embodiments the at least one flow diverter element extends over between 25% and 85% of the width of the flow path.

In embodiments the component inlet has a face area and the at least one flow diverter element covers at least 10% of the face area.

In embodiments the component inlet has a face area and the at least one flow diverter element covers at least 20% of the face area.

In embodiments the at least one flow diverter element includes a plurality of flow diverter elements. The plurality of flow diverter elements are uniform.

In embodiments the at least one flow diverter element includes a plurality of flow diverter elements and a configuration of the plurality of flow diverter elements varies.

According to another aspect of the invention, a method of operating an environmental control system of a vehicle includes providing a medium to a conduit having a turn formed therein, the turn being arranged adjacent to an outlet of the conduit, and redirecting the medium from the outlet of the conduit via contact with at least one flow diverter element.

In embodiments redirecting the medium from the outlet of the conduit uniformly distributes the medium across an inlet of a downstream component.

In embodiments redirecting the medium from the outlet of the conduit directs at least a portion of the medium away from a back end of the conduit.

In embodiments heating the at least one flow diverter element.

In embodiments heating the at least one flow diverter element includes providing a hot fluid to an interior of the at least one flow diverter element.

### BRIEF DESCRIPTION OF THE DRAWINGS

The following descriptions should not be considered limiting in any way. With reference to the accompanying drawings, like elements are numbered alike:
FIG. 1 is a schematic diagram of a portion of an environmental control system of an aircraft; and
FIG. 2 is a schematic diagram of turn within a flow path of the environmental control system;
FIG. 3 is a schematic diagram of turn within the flow path of the environmental control system including at least one flow diverter element according to an embodiment;
FIG. 4 is a detailed schematic diagram of a portion of the flow path of the environmental control system including at least one flow diverter element according to an embodiment;
FIG. 5 is a schematic diagram of turn within the flow path of the environmental control system including at least one flow diverter element according to an embodiment;
FIG. 6 is a schematic diagram of turn within the flow path of the environmental control system including at least one flow diverter element according to another embodiment;
FIG. 7 is a schematic diagram of turn within the flow path of the environmental control system including at least one flow diverter element according to another embodiment;
FIG. 8 is a schematic diagram of turn within the flow path of the environmental control system including at least one flow diverter element according to yet another embodiment; and
FIG. 9 is a schematic diagram of turn within the flow path of the environmental control system including at least one flow diverter element according to an embodiment.

### DETAILED DESCRIPTION

A detailed description of one or more embodiments of the disclosed apparatus and method are presented herein by way of exemplification and not limitation with reference to the Figures.

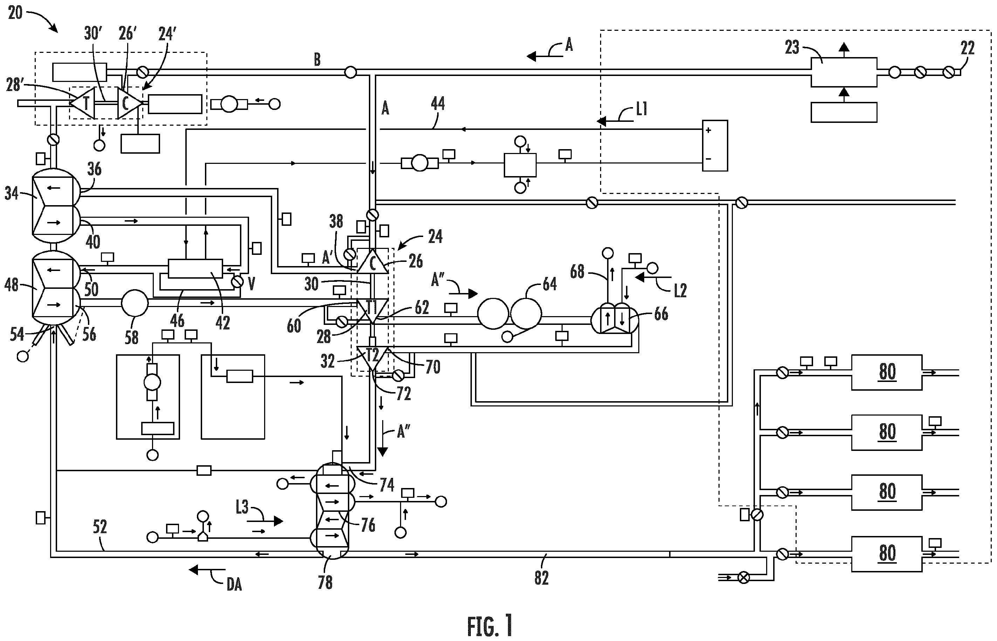

With reference now to FIG. 1, a schematic diagram of a portion of an existing environmental control system (ECS), such as an air conditioning unit or pack for example, is depicted according to non-limiting embodiments as illustrated. Although the environmental control system 20 is described with reference to an aircraft, alternative applications, such as another vehicle for example, are also within the scope of the invention. As shown in the figure, the ECS 20 can receive a medium A at an inlet 22. In an embodiment where the environmental control system 20 is used in an aircraft application, the medium A may be bleed air, which is pressurized air originating from, i.e., being "bled" from, an engine or auxiliary power unit of the aircraft. It shall be understood that one or more of the temperature, humidity, and pressure of the bleed air can vary based upon the compressor stage and revolutions per minute of the engine or auxiliary power unit from which the air is drawn.

In another embodiment, the medium A provided to the inlet 22 is fresh air, such as outside air for example. The outside air can be procured via one or more scooping mechanisms, such as an impact scoop or a flush scoop for example. In an embodiment, the medium A is ram air drawn from a portion of a ram air circuit. Generally, the fresh or outside air as described herein is at an ambient pressure equal to an air pressure outside of the aircraft when the aircraft is on the ground and is between an ambient pressure and a cabin pressure when the aircraft is in flight.

The ECS 20 additionally includes at least one thermodynamic device 24. The thermodynamic device 24 is a mechanical device that includes components for performing thermodynamic work on a medium (e.g., extracts work from or applies work to the medium A by raising and/or lowering pressure and by raising and/or lowering temperature). Examples of a thermodynamic device 24 include an air cycle machine, a two-wheel air cycle machine, a three-wheel air cycle machine, a four-wheel air cycle machine, etc. As shown, the thermodynamic device 24, also referred to herein as an air cycle machine, may include a compressor 26 and at least one turbine 28 operably coupled by a shaft 30. In an embodiment, the thermodynamic device 24 includes two turbines 28, 32. In such embodiments, the medium A may be configured to flow through the turbines 28, 32 in series, or alternatively, in parallel.

A compressor 26 is a mechanical device configured to raise a pressure of a medium and can be driven by another mechanical device (e.g., a motor or a medium via a turbine). Examples of compressor types include centrifugal, diagonal or mixed-flow, axial-flow, reciprocating, ionic liquid piston, rotary screw, rotary vane, scroll, diaphragm, air bubble, etc. A turbine, such as any of turbines 28 and 32 for example, is a mechanical device that expands a medium and extracts work therefrom (also referred to as extracting energy) to drive the compressor 26 via the shaft 30.

As shown, the medium A provided at the inlet 22 may be cooled within a heat exchanger 23 before being delivered to the thermodynamic device 24. The heat sink for the heat exchanger 23 used to cool the medium A may be ram air, engine fan air, or fuel. In the illustrated, non-limiting embodiment, the cooled medium A is provided to an inlet of the compressor 26. The act of compressing the medium A heats and increases the pressure of the medium A.

An inlet 36 of a first regeneration heat exchanger 34 is fluidly connected to the outlet 38 of the compressor 26. The compressed medium A' output from the compressor outlet 38 may be further cooled within the first heat exchanger 34. In the illustrated, non-limiting embodiment, the secondary fluid used to cool the compressed medium A' within the first regeneration heat exchanger 34 is a flow provided from an outlet of another thermodynamic device 24'. As shown, the flow of medium A at a location downstream from the heat exchanger 23 may be split into a first portion A provided to the compressor 26 of the thermodynamic device 24 and a second portion B provided to a second thermodynamic device 24'. Some of the second portion B may be provided to a turbine 28' of the second thermodynamic device 24'. Within the turbine 28', energy is extracted from the second portion B of the medium and used to drive the compressor 26' via a shaft 30', thereby reducing both the pressure and the temperature of the second portion B of the medium. However, embodiments where another secondary fluid is used to cool the compressed medium A' within the first regeneration heat exchanger 34 are also within the scope of the invention.

In some embodiments, a first air-liquid heat exchanger 42 is located downstream from the outlet 40 of the first regeneration heat exchanger 34. Within the first air-liquid heat exchanger 42, thermal energy is transferred between the compressed medium A' and a liquid L1 provided from a liquid loop 44 used to condition, for example cool, one or more loads of the vehicle. In an embodiment, heat is transferred from the compressed medium A' to the liquid L of the first liquid loop 44 at the first air-liquid heat exchanger 42. However, a bypass conduit 46 having a valve V may be arranged in parallel with the first air-liquid heat exchanger 42 such that the compressed medium A' output from the outlet 40 of the first regeneration heat exchanger 42 may bypass the first air-liquid heat exchanger 42.

Located downstream from the first air-liquid heat exchanger 42 and from the bypass conduit 46 is a second regeneration heat exchanger 48. Accordingly, a flow of compressed medium A' output from at least one of the first air-liquid heat exchanger 42 and the bypass conduit 46 is provided to an inlet 50 of the second regeneration heat exchanger 42. In an embodiment, the second regeneration heat exchanger 48 may be an air-air heat exchanger configured to utilize excess cooling capacity of the ECS 20 to further cool the compressed medium A'. For example, as will be described in more detail below, part of a conditioned form of the medium ready to be delivered to one or more loads of the vehicle, such as the cockpit for example, may be diverted along a regeneration pathway 52 to a second inlet 54 of the second regeneration heat exchanger 50. At the second regeneration heat exchanger 50, the compressed medium A' is cooled via thermal exchange with this diverted medium DA. The heated diverted medium DA may then be exhausted overboard or provided to another component of subsystem of the aircraft.

The further cooled compressed medium A' output from the outlet 56 of the second regeneration heat exchanger 50 may have water removed therefrom, such as via a water collector or scupper 58 for example, before being provided to an inlet 60 of the turbine 28. It should be appreciated that at the water collector 58, the compressed medium A' is at its highest pressure within the ECS 20, and therefore, the water collector 58 may be considered a high-pressure water collector.

Within the turbine 28, energy is extracted from the compressed medium A' to form an expanded medium A". The work extracted from the compressed medium A' in the turbine 28 drives the compressor 26. The pressure downstream of the first turbine 28 is at a middle pressure, a pressure lower than upstream from the first turbine 28 but higher than the pressure of the medium A at the air cycle machine outlet (outlet of turbine 32). In an embodiment, the expanded medium A" is provided to a middle-pressure water collector 64 configured to remove moisture therefrom. The middle-pressure water collector 64 is configured to coalesce the fog within the expanded medium A" and remove free moisture from the flow of the expanded medium A". The temperature of the expanded medium A" output from an outlet 62 the turbine 28 may be above freezing to facilitate the water removal. In an embodiment, the temperature of the expanded medium A" at and downstream from the outlet 62 of the turbine 28 is maintained above freezing when the aircraft is at lower altitudes where water may be present.

In the illustrated, non-limiting embodiment, the expanded medium A" output from the turbine 28 is provided to another heat exchanger, such as a second air-liquid heat exchanger 66. At the second air-liquid heat exchanger 66, the expanded medium A" is arranged in a heat transfer relationship with another liquid L2 provided from another liquid loop 68, such as used to cool one or more loads of the vehicle. Although the liquid loop 68 is illustrated and described herein as being distinct from the liquid loop 44 associated with the first air-liquid heat exchanger 42, it should be understood that the same liquid from the same liquid loop may be used to heat the medium A at both heat exchangers 42, 66. In such embodiments, the second air-liquid heat exchanger 66 is arranged downstream from the first air-liquid heat exchanger 42 relative to both the flow of the medium A and the flow of the liquid.

Regardless of the source of the liquid, within the second air-liquid heat exchanger 66, thermal energy is transferred between the expanded medium A" and the liquid L2. In an embodiment, the expanded medium A" is heated by the liquid L2 and the resulting cooler liquid L2 may then directed to one or more heat loads of the liquid loop 68. Because heat is transferred from the compressed medium A' to the liquid L of the first liquid loop 44 at the first air-liquid heat exchanger 42, and heat is transferred from the liquid L2 of the second liquid loop 68 to the expanded medium A" at the second air-liquid heat exchanger 42, the first liquid loop 44 may be considered a hot or heating liquid loop and the second liquid loop 68 may be considered a cold or cooling liquid loop.

From the second air-liquid heat exchanger 66, the expanded medium A" may be provided to an inlet 70 of the second turbine 32. The energy extracted from the expanded medium A" within the second turbine 32 is also used to drive the compressor 26. The resulting expanded medium A" output from an outlet 72 of the second turbine 32 is cooler and has a lower pressure than the expanded medium A" provided at the inlet thereof.

From the second turbine 32, the expanded medium A" is provided to an inlet 74 of a third heat exchanger. In an embodiment, the third heat exchanger is a third air-liquid heat exchanger 76 where the expanded medium A" is thermally coupled to a liquid L3. However, embodiments where the third heat exchanger is an air-air heat exchanger are also within the scope of the invention. The liquid L3 provided as the secondary fluid at the third air-liquid heat exchanger 76 may be the same liquid used in at least one of the first and second air-liquid heat exchangers 42, 66. In an embodiment, the third air-liquid heat exchanger 76 is arranged downstream from the second air-liquid heat exchanger relative to the flow of both the medium A" and the liquid L2 of liquid loop 68. However, embodiments where the liquid L3 provided to the third air-liquid heat exchanger 76 is different than that provided to both the first air-liquid heat exchanger 42 and the second air-liquid heat exchanger 66 are also contemplated herein.

Within the third air-liquid heat exchanger 76, thermal energy is transferred between the expanded medium A" and the liquid L3. In an embodiment, the expanded medium A" is heated by the liquid L3, and the resulting cooler liquid L3 is then directed to one or more liquid cooled heat loads. The expanded medium A" at the outlet 78 of the third air-liquid heat exchanger 76 may be controlled between 0°F and 35°F depending on the altitude of the aircraft. The conditioned, expanded medium A" leaving the third air-liquid heat exchanger 76 may be provided to one or more loads, illustrated schematically at 80 via a conduit 82. These loads include but are not limited to three potential destinations: the cockpit, the forced air-cooled equipment, or a bay vent. In some embodiments, at least a portion of the conditioned, expanded medium A" at the outlet 78 of the third air-liquid heat exchanger 76 is provided to the second regeneration heat exchanger 48 via a regeneration pathway 52 (as the diverted air DA) previously described herein. It should be understood that the environmental control system 20 illustrated and described herein is intended as an example only, and that an ECS having another suitable flow configuration for conditioning one or more mediums is within the scope of the invention.

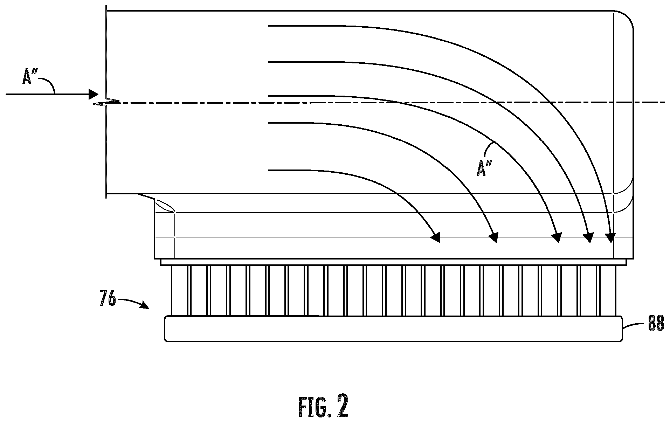

Due to the limited sizing envelope of an ECS 20, the flow path of the medium being conditioned therein typically includes several bends or turns. In some applications, an inlet of a component of an ECS 20 may be arranged at a non-zero angle relative to the flow path of medium A provided thereto. For example, in the non-limiting embodiment of FIG. 1, the inlet 74 of the third air-liquid heat exchanger 76 is oriented generally perpendicularly to the direction of flow of the compressed medium A" output from the outlet 72 of the second turbine 32. Accordingly, the compressed medium A" output from the second turbine 32 must make a 90 degree turn to reach the inlet 74 of the third air-liquid heat exchanger 76. Such a turn in the flow path causes the flow of the medium, such as the compressed medium A" for example, to be non-uniformly distributed across the inlet 74 of the heat exchanger 76 resulting in a reduced efficiency thereof. As shown in FIG. 2, it is difficult for the flow of compressed medium A" to make a sharp turn and as a result, the flow of compressed medium A" is typically concentrated towards a back or far side, identified at 88, of the heat exchanger 76. It should be appreciated that although a turn is illustrated and described herein with respect to the flow between the second turbine 32 and the third air-liquid heat exchanger 76, a flow between any two components of an ECS 20 arranged directly in series relative to a flow of a medium is within the scope of the invention.

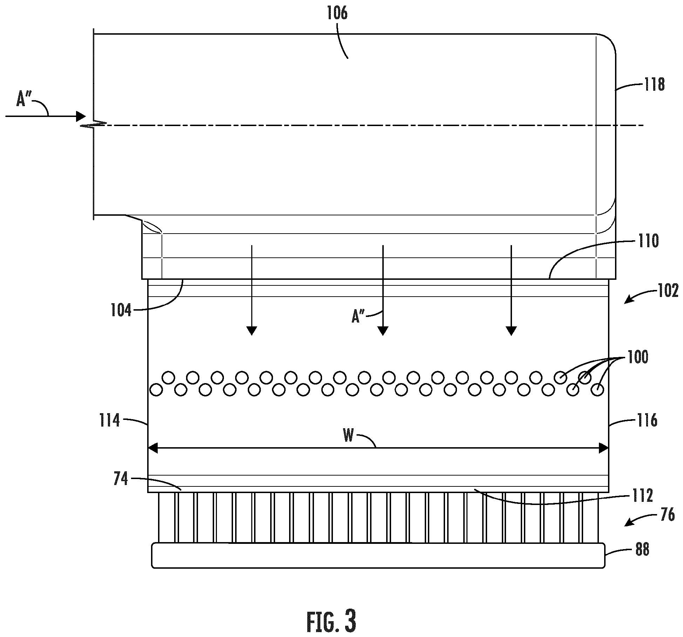

With reference now to FIGS. 3-8, to distribute the flow of medium A" more uniformly at a location directly downstream from a turn in the flow path, one or more flow diverter elements 100 may be arranged within the flow path. In an embodiment, the at least one flow diverter element 100 is located at or directly downstream from an outlet of the turn. In the illustrated, non-limiting embodiment, a duct 102 is arranged between the outlet end 104 of the conduit 106 defining the turn and the inlet 74 of the heat exchanger 76 and the one or more flow diverter elements 100 are arranged within the duct 102. The duct 102 may include an inlet end 110, and outlet end 112, an upstream side 114 located closest to flow upstream from the turn, and a downstream side 116 located generally opposite the upstream side 114. The downstream side 116 of the duct 102 may be connected to and in some embodiments aligned with a back end 118 of the conduit 106 defining the turn. However, in other embodiments, the one or more flow diverter elements 100 may be arranged directly at a portion of the component downstream from the turn. For example, the at least one flow diverter element 100 may be arranged within an inlet manifold of the heat exchanger 76 or even at a portion of the core of the heat exchanger 76, such as within the heat exchanger weldment for example.

In an embodiment, the at least one flow diverter element 100 includes a plurality of flow diverter elements. In such embodiments, the plurality of flow diverter elements 100 may be arranged in one or more groups, for example columns (extending generally along a direction of flow) and/or rows (extending generally at an angle to the direction of flow). However, embodiments where a single flow diverter element 100 having a serpentine-like configuration configured to intersect the fluid flow path at multiple are also within the scope of the invention. Such a configuration may be considered comparable to a plurality of flow diverter elements 100 and it should be understood that any description provided with respect to a plurality of flow diverter elements may similarly describe the plurality of intersections defined by the single flow diverter element.

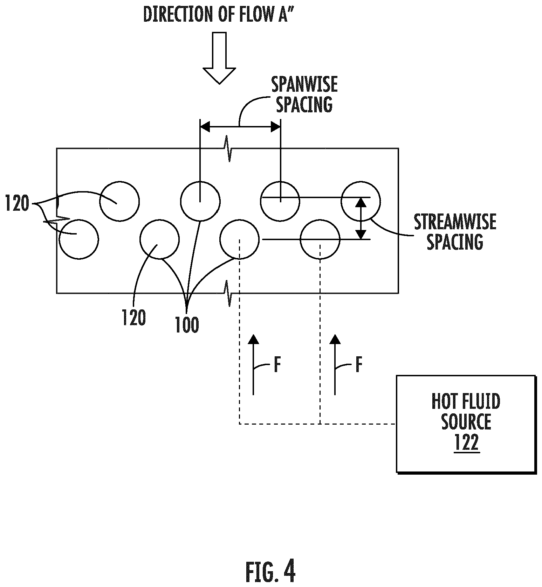

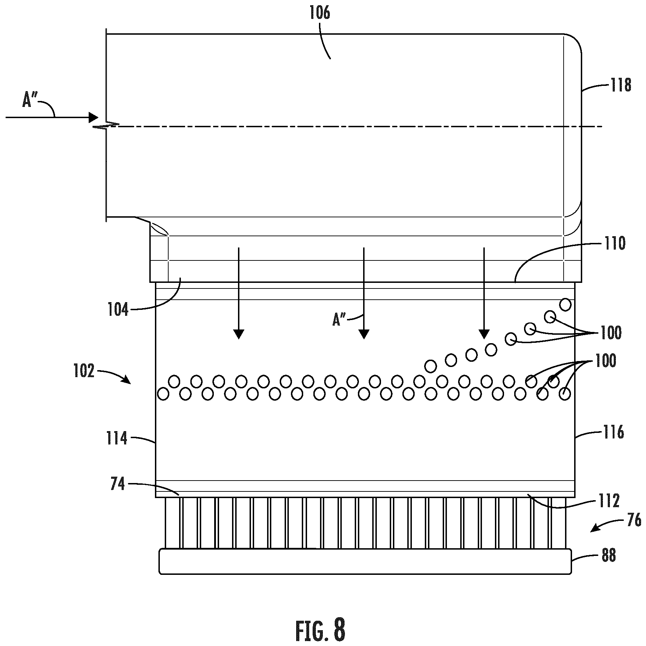

In the illustrated, non-limiting embodiments of FIGS. 3-7, the plurality of flow diverter elements 100 are arranged in two groups, such as rows for example, with adjacent flow diverter elements 100 in a group being spaced apart. As best shown in FIG. 4, the distance between adjacent flow diverter elements 100 in the same or different groups, measured perpendicular to the direction of flow, may be referred to herein as spanwise spacing. The distance between adjacent flow diverter elements 100 within the same or different groups, measured parallel to the direction of flow, may be referred to herein as streamwise spacing. The spanwise and streamwise spacing between adjacent flow diverter elements 100 may be constant, or alternatively, may vary, such as based on the position of the flow diverter element 100 within the flow path (i.e., near a forward end or back end.) In an embodiment, a group of flow diverter elements 100 has a generally linear configuration, such as a row extending generally perpendicular to the intended direction of flow of the medium A". However, embodiments where a row of flow diverter elements 100 is arranged at another angle relative to the intended direction of flow are also within the scope of the invention. Similarly, embodiments where a group of flow diverter elements 100 has a non-linear configuration, such as where the flow diverter elements 100 are arranged in a curve for example (see FIG. 8), are also contemplated herein.

In embodiments including a plurality of rows of flow diverter elements 100, the plurality of rows may but need not be oriented parallel to one another. In embodiments including a plurality of rows, flow diverter elements 100 within adjacent rows may be staggered relative to one another, such as in a direction generally perpendicular to the direction of flow for example. Further, it should be understood that adjacent groups, for example rows, of flow diverter elements 100 may but need not include the same number of flow diverter elements 100. Similarly, the configuration of the plurality of flow diverter elements 100 within a group, or the configuration of the plurality of flow diverter elements 100 of different groups, may be substantially uniform, or may vary, for example based on the position of the flow diverter element 100 relative to the flow path. In an embodiment, a diameter of the flow diverter elements 100 arranged within the flow path varies.

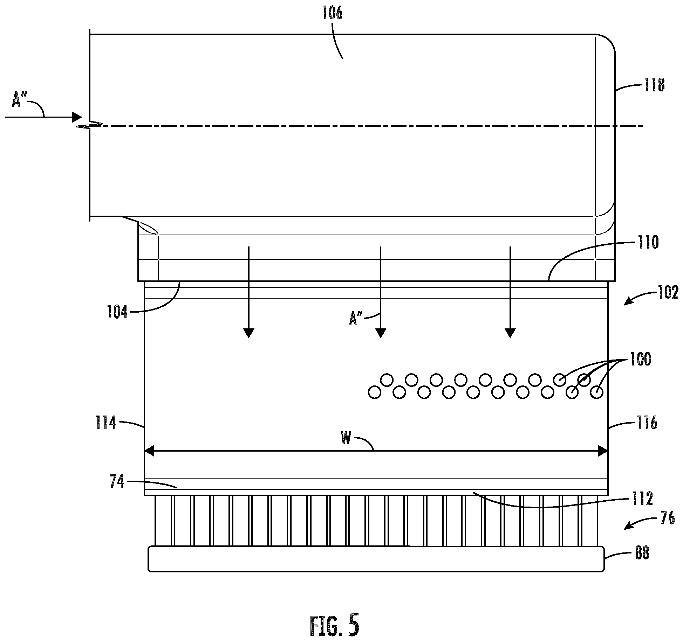

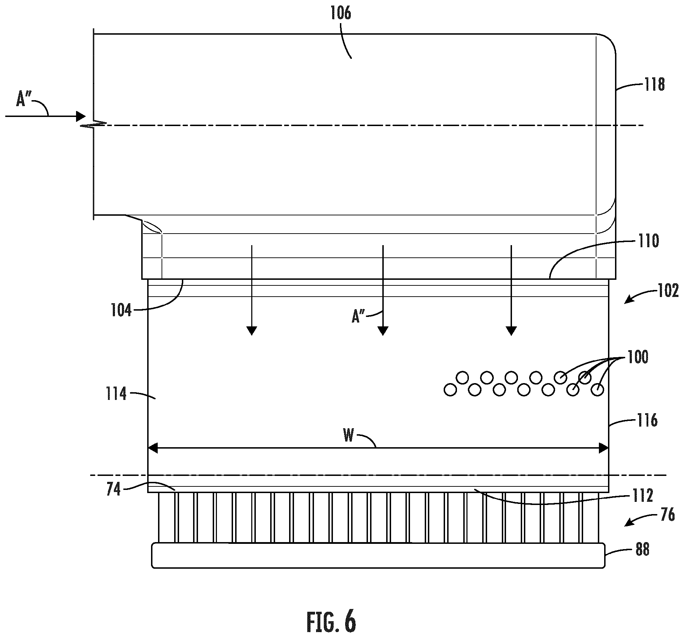

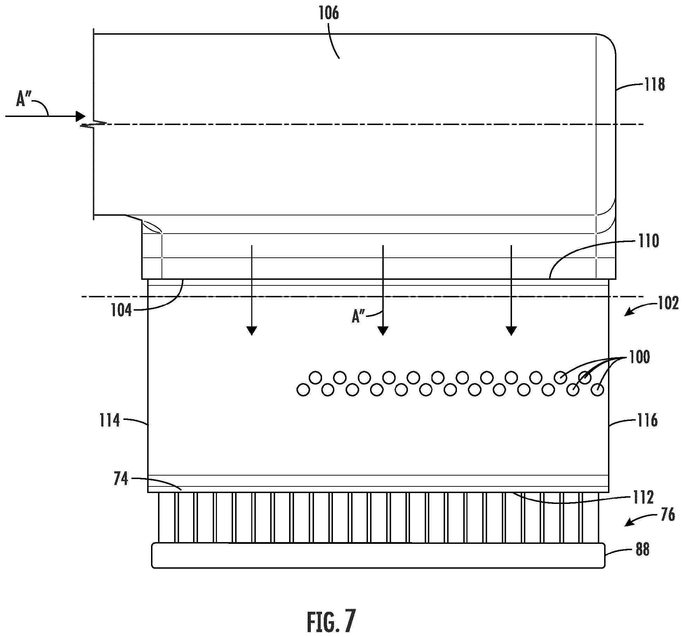

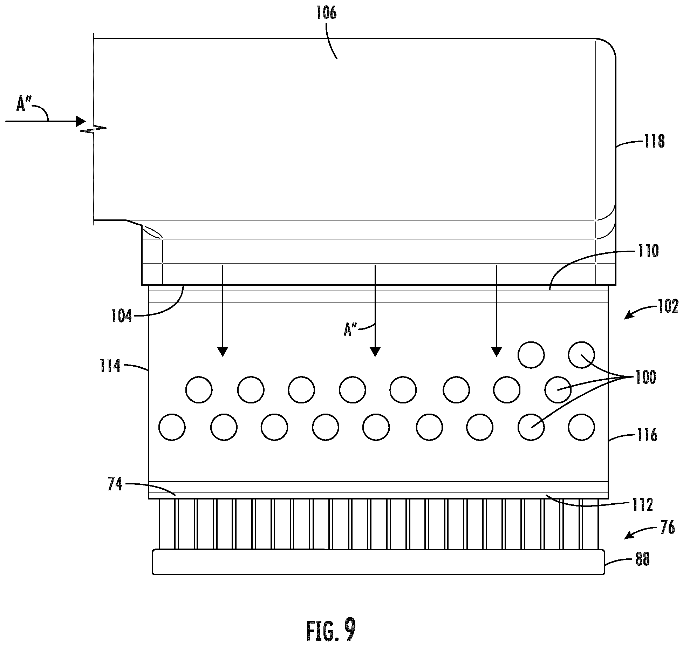

The inlet 74 of the heat exchanger 76 has a face area defined by the width and depth of the heat exchanger 76 and the at least one flow diverter element 100 covers a portion of the face area. The amount of the inlet face area that is "covered" by the one or more flow diverter elements 100 is the area that is not directly visible to the incoming flow A. In an embodiment, at least 10% of the face area, and in some embodiments may be configured to cover at least 12%, at least 15%, at least 18%, at least 20%, at least 22%, or at least 25% of the face area of the heat exchanger is covered by the at least one flow diverter element 100. As shown in the embodiments illustrated in FIGS. 3, 8, and 9, the flow diverter elements 100 may be arranged over the entire width (identified as W) of the flow path defined between the upstream side 114 and the downstream side 116 of the duct 102 or in some embodiments by a corresponding portion of the heat exchanger 76). In other embodiments, the flow diverter elements 100 may extend over only a portion of the width of the flow path. For example, the flow diverter elements 100 may be arranged over at least 25% of the width, such as between approximately 25% and 85% of the width. In some embodiments included in the FIGS., the flow diverter elements 100 are arranged over at least about 30% of the width (FIG. 6), at least about 50% of the width (FIG. 5), or at least about 75% of the width of the flow path (FIG. 7). It should be understood that the percentages provided are intended as an example only and an embodiment where the flow diverter elements 100 are arranged over any percentage of the width less than 100% is within the scope of the invention.

In embodiments where the flow diverter elements 100 do not extend over the entire width of the flow path, the flow diverter elements 100 may be arranged adjacent to the downstream side 116 of the duct 102 or downstream component and extend over a portion of the width toward the upstream side 114. In embodiments where the flow diverter elements 100 are arranged in a plurality of groups, such as rows for example, it should be understood that each group of flow diverter elements 100 may extend over the same width or may extend over different widths relative to the flow path.

Each flow diverter element 100 may have any suitable configuration including size and shape. The shape of the flow diverter element 100 may be selected to divert or redirect the flow configured to contact the flow diverter element away from the flow diverter element. However, the shape selected should not inhibit the flow generally in the flow direction. In the illustrated, non-limiting embodiment, at least one, and in some embodiments each of the flow diverter elements 100 has a generally cylindrical body having a uniform diameter over its length. Embodiments including a cylindrical shape with a variable diameter, or alternatively, with another shape having a constant or variable size are also contemplated herein.

A longitudinal axis of a flow diverter element 100 may be arranged within a plane oriented substantially perpendicular to the direction of flow downstream from the turn. Alternatively, or in addition, the longitudinal axis of a flow diverter element 100 may be oriented parallel to a side 114, 116 of the duct 102 and/or downstream component where the flow diverter element 100 is mounted. Accordingly, it should be understood that that configuration of the flow diverter elements 100, the general layout of the flow diverter elements 100, and the spacing between flow diverter elements 100 may be adjusted to increase or decrease the resulting flow resistance based on the anticipated flow conditions.

Regardless of the shape and size of the one or more flow diverter elements 100, at least one flow diverter element arranged within the flow path has a substantially hollow interior 120 (see FIG. 4). For example, each of the plurality of flow diverter elements 100 may have a substantially hollow interior 120. Accordingly, in an embodiment, at least one of the hollow flow diverter elements 100, and in some embodiments each of the plurality of hollow flow diverter elements 100, are fluidly coupled to a hot fluid source 122. As a result, a hot fluid F is configured to flow through the at least one flow diverter element 100. The fluid F provided by the hot fluid source 122 to at least one of the hollow flow diverter elements 100 may be liquid L3, or any other suitable fluid on board the aircraft. The term "hot" as used herein is intended to indicate that the fluid F configured to flow through the flow diverter elements 100 has an increased temperature compared to the medium A moving along the flow path. The hot fluid may be provided to the interior 120 of at least some of the plurality of flow diverter elements 100 in parallel, or alternatively, may be provided to the interior of a at least some of plurality of flow diverter elements 100 in series.

As a result of the cold temperature and moisture entrained within the medium A", any flow diverter element 100 positioned within the flow path of the medium A" is susceptible to the formation of ice thereon. By moving a flow of hot fluid through the flow diverter elements 100, the exterior surface of the flow diverter elements 100 exposed to the medium A" is heated and as a result ice formation is prevented. Further, heat may transfer from the fluid within the interior 120 of the flow diverter elements 100 to the surrounding medium A". In an embodiment, the temperature of the fluid and/or the configuration of the flow diverter elements 100 within the flow path is selected to increase the temperature of the medium A", thereby preventing ice from forming at the downstream component or at a downstream portion of the downstream component, such as the inlet manifold and/or the core of the heat exchanger 76 as the medium A" passes therethrough for example.

Inclusion of one or more flow diverter elements 100 at or upstream from the inlet 74 of the heat exchanger 76 promotes better flow uniformity through the heat exchanger 76. Further, heating the flow diverter elements 100 helps prevent or trap ice at a location upstream from the core of the heat exchanger 76, resulting in better flow uniformity and heat exchanger performance.

The term "about" is intended to include the degree of error associated with measurement of the particular quantity based upon the equipment available at the time of filing the application.

The terminology used herein is for the purpose of describing particular embodiments only and is not intended to be limiting of the present invention. As used herein, the singular forms "a," "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present invention has been described with reference to an exemplary embodiment or embodiments, it will be understood by those skilled in the art that various changes may be made without departing from the scope of the present invention as defined by the claims. In addition, many modifications may be made to adapt a particular situation or material to the teachings of the present invention without departing from the scope of the claims. Therefore, it is intended that the present invention not be limited to the particular embodiment disclosed as the best mode contemplated for carrying out this present invention, but that the present invention will include all embodiments falling within the scope of the claims.

## Claims

1. An environmental control system comprising:
a component having a component inlet (36) and a component outlet (38);
a flow path fluidly connected to the component inlet and the component outlet, the flow path including a turn upstream from the component inlet; and
at least one flow diverter element (100) arranged within the flow path between the turn and the component outlet, the at least one flow diverter element being positioned to uniformly distribute a flow across the component inlet.

2. The environmental control system of claim 1, wherein the turn is a 90-degree turn.

3. The environmental control system of claim 1, wherein the component is a heat exchanger (34) and the at least one flow diverter element is arranged within an inlet manifold of the heat exchanger, or wherein the component is a heat exchanger and the at least one flow diverter element is arranged at a core of the heat exchanger.

4. The environmental control system of any preceding claim, further comprising a duct (102) arranged between the turn and the component inlet along the flow path, the at least one flow diverter element (100) being arranged within the duct.

5. The environmental control system of any preceding claim, wherein the at least one flow diverter element (100) is heated.

6. The environmental control system of claim 5, wherein the at least one flow diverter element has a hollow interior fluidly coupled to a hot fluid source.

7. The environmental control system of any preceding claim, wherein the at least one flow diverter element extends over an entire width of the flow path., or wherein the at least one flow diverter element extends over only a portion of a width of the flow path, and optionally wherein the at least one flow diverter element extends over between 25% and 85% of the width of the flow path.

8. The environmental control system of any preceding claim, wherein the component inlet has a face area and the at least one flow diverter element covers at least 10% of the face area.

9. The environmental control system of claim 8, wherein the component inlet has a face area and the at least one flow diverter element covers at least 20% of the face area.

10. The environmental control system of any preceding claim, wherein the at least one flow diverter element includes a plurality of flow diverter elements, the plurality of flow diverter elements being uniform, or wherein the at least one flow diverter element includes a plurality of flow diverter elements and a configuration of the plurality of flow diverter elements varies.

11. A method of operating an environmental control system of a vehicle, the method comprising:
providing a medium to a conduit having a turn formed therein, the turn being arranged adjacent to an outlet of the conduit; and
redirecting the medium from the outlet of the conduit via contact with at least one flow diverter element.

12. The method of claim 11, wherein redirecting the medium from the outlet of the conduit uniformly distributes the medium across an inlet of a downstream component.

13. The method of claim 11, wherein redirecting the medium from the outlet of the conduit directs at least a portion of the medium away from a back end of the conduit.

14. The method of claim 11, 12 or 13, further comprising heating the at least one flow diverter element.

15. The method of claim 14, wherein heating the at least one flow diverter element further comprising providing a hot fluid to an interior of the at least one flow diverter element.
